# EUROPEAN PATENT APPLICATION

(11) **EP 4 550 552 A1**
(43) Date of publication of application: **07.05.2025**
(21) Application number: 23831474.4
(22) Date of filing: 27.06.2023
(51) Int. Cl.: H01M 50/30, H01M 50/213, H01M 50/291, H01M 50/293, H01M 50/35, H01M 50/367

(54) **ELECTRIC POWER STORAGE MODULE**

(30) Priority: 30.06.2022 JP 2022106104; 30.06.2022 JP 2022106067
(71) Applicant: Panasonic Intellectual Property Management Co., Ltd., Kadoma-shi, Osaka 571-0057 (JP)
(72) Inventor: MURAYAMA, Chifumi, Kadoma-shi, Osaka 571-0057 (JP); HIRANO, Tatsuya, Kadoma-shi, Osaka 571-0057 (JP); OGINO, Hirotaka, Kadoma-shi, Osaka 571-0057 (JP); TAKASAKI, Hiroshi, Kadoma-shi, Osaka 571-0057 (JP); MURATSU, Jiro, Kadoma-shi, Osaka 571-0057 (JP)
(74) Representative: Novagraaf International SA
(86) International application number: PCT/JP2023/023873
(87) International publication number: WO 2024/005034

(57) **Abstract**

This electric power storage module comprises: a plurality of electric power storage devices (22); a case (12) that contains the plurality of electric power storage devices (22); an opening (26c) that is provided to a portion of the case (12) for discharging gas from the interior of the case (12); a porous inside filter (36) that is located in the opening (26); a porous outside filter (38) that is located on the outside of the inside filter (36) with a gap therebetween; and a spacer (28) that is provided between the inside filter (36) and the outside filter (38), the spacer retaining the gap between the filters and having formed therein an opening through which the gas passes.

## Description

### TECHNICAL FIELD

The present disclosure relates to an electric power storage module having an opening at a case for discharging gas.

### BACKGROUND

An electric power storage module including a chargeable/dischargeable secondary battery is used as a power source for portable devices, electric vehicles, and the like.

A large electric power storage module used as a power source of an electric vehicle includes a plurality of cell holders holding a plurality of cells (cell batteries). Each battery is charged and discharged in accordance with chemical reaction. Therefore, gas may be generated inside the battery depending on the situation, and the electric power storage module has a structure for discharging the generated gas.

For example, Patent Literature 1 discloses a gas discharge mechanism of an electric power storage module.

### CITATION LIST

### PATENT LITERATURE

Patent Literature 1: JP 6574987 B

### SUMMARY

### TECHNICAL PROBLEM

The gas discharge mechanism improves reliability of the electric power storage module. However, with the recent increase in capacity of a power storage device, further improvement in reliability as an electric power storage module is desired.

### SOLUTION TO PROBLEM

The electric power storage module according to the present disclosure includes a plurality of power storage devices; a case that contains the plurality of power storage devices; an opening that is provided to a portion of the case for discharging gas in the case; a porous inner filter that is located in the opening; a porous outer filter that is located outside the inner filter with a gap therebetween; and a spacer that is provided between the inner filter and the outer filter, holds the gap therebetween, and in which an opening through which the gas passes is formed.

### ADVANTAGEOUS EFFECTS OF INVENTION

According to the present disclosure, the use of the spacer increases the reliability of the filter.

### BRIEF DESCRIPTION OF DRAWINGS

FIG. 1 is a perspective view illustrating an electric power storage module in an embodiment of the present disclosure.
FIG. 2 is a cross sectional view illustrating a configuration of a gas discharge portion provided on one end side of a case in the embodiment.
FIG. 3 is an exploded perspective view illustrating a configuration of the gas discharge portion in the embodiment.
FIG. 4 is an enlarged view of a spacer 28 in FIG. 2.
FIG. 5 is an enlarged view of a holding plate 34 in FIG. 2.
FIG. 6 is a diagram illustrating a configuration of a gas discharge portion provided on one end side of a case in the embodiment and is a cross-sectional view at a position shifted from a center in an axial direction in which a bolt is located.
FIG. 7 is a perspective view illustrating the electric power storage module in an exploded manner.
FIG. 8 is a perspective view of an electric power storage block in an exploded manner.
FIG. 9A is a perspective view illustrating a configuration of a rib in the electric power storage module.
FIG. 9B is an enlarged view of main parts illustrating the configuration of the rib in the electric power storage module.
FIG. 10 is a diagram for describing holding of the power storage device by a holder using the rib in the electric power storage module, where the left diagram illustrates a status before insertion of the power storage device, and the right diagram illustrates a status after insertion of the power storage device.
FIG. 11 is a plan view of a holder in the electric power storage module as viewed in the axial direction and illustrates an example in which there is one rib.
FIG. 12 is a plan view of a holder in the electric power storage module as viewed in the axial direction and illustrates an example in which there are two ribs.
FIG. 13 is a plan view of a holder in the electric power storage module as viewed in the axial direction and illustrates an example in which there are three ribs.
FIG. 14 is a plan view of a holder in the electric power storage module as viewed in the axial direction and illustrates an example in which there are four ribs.
FIG. 15 is a diagram illustrating an example in which the shape of the rib in the electric power storage module is changed.
FIG. 16 is a diagram illustrating a state in which the power storage device is held by the holder in the electric power storage module.
FIG. 17 is a plan view illustrating an example in which a notch is formed in a bottom surface of the holder in the electric power storage module.
FIG. 18 is a diagram illustrating an example in which a support column is provided instead of a partition wall in the electric power storage module.
FIG. 19A is a diagram illustrating an example in which a side surface of the power storage device in the electric power storage module is covered with a sleeve, and a slit is formed in the sleeve.
FIG. 19B is a diagram illustrating an example in which a side surface of the power storage device in the electric power storage module is covered with a sleeve, and a round hole is formed as a recess in the sleeve.

### DESCRIPTION OF EMBODIMENTS

Hereinafter, embodiments of the present disclosure will be described with reference to the drawings. Note that the following embodiments do not limit the present disclosure, and a configuration obtained by selectively combining a plurality of examples is also included in the present disclosure.

### "External Configuration"

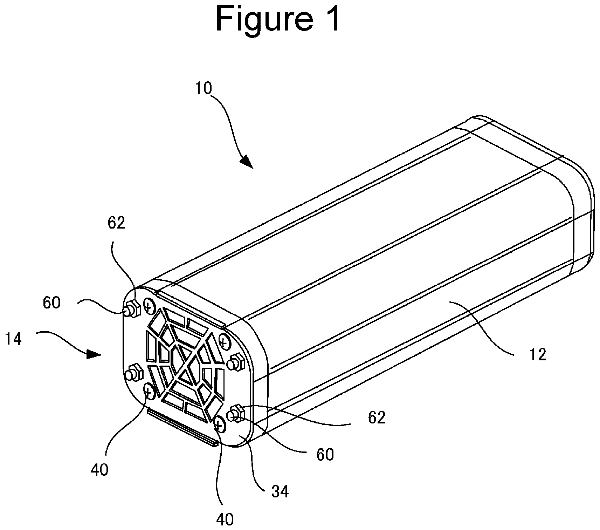

FIG. 1 is a perspective view illustrating an external configuration of an electric power storage module according to an embodiment. In this example, an electric power storage module 10 contains a plurality of batteries as an example of the power storage device in a case 12 having a quadrangular prism shape. A gas discharge portion 14 is provided on one end side of the case 12. Therefore, the gas generated from the battery inside the case 12 is discharged from the gas discharge portion 14 to the outside.

The gas discharge portion 14 is provided with a holding plate 34 at one end (front side) in the axial direction thereof. Four nuts 62 for fixing four fixing shafts 60 penetrating the interior of the case 12 are provided in the periphery of the holding plate 34, and the case 12 is tightened from both ends in the axial direction by screwing the nuts 62 into the end of the fixing shaft 60. Note that, on the surface on the other end side of the case 12, for example, a positive electrode may be provided at a central portion, and a negative electrode may be provided in the periphery, and the other end of the fixing shaft 60 may be appropriately fixed to the end surface on the other end side of the case 12.

Here, a plurality of batteries are contained in the case 12, and for example, four electric power storage blocks in which 10 batteries are assembled can be located in the axial direction. In addition, a circuit board 50 on which a circuit for controlling charging and discharging of the battery is mounted may also be contained in the case 12.

In addition, four bolts 40 are provided around the holding plate 34 (on the inner side of the fixing shaft 60) to fix the respective members of the gas discharge portion 14 as described below.

The electric power storage module 10 of the present disclosure is used as a power source of, for example, an electric motorcycle, an assist bicycle, an electric wheelchair, an electric tricycle, or an electric cart. However, the present disclosure does not specify the application of the electric power storage module 10, and the electric power storage module can also be used as a power source for various electric devices used outdoors such as electric tools.

### "Configuration of Gas Discharge Portion 14"

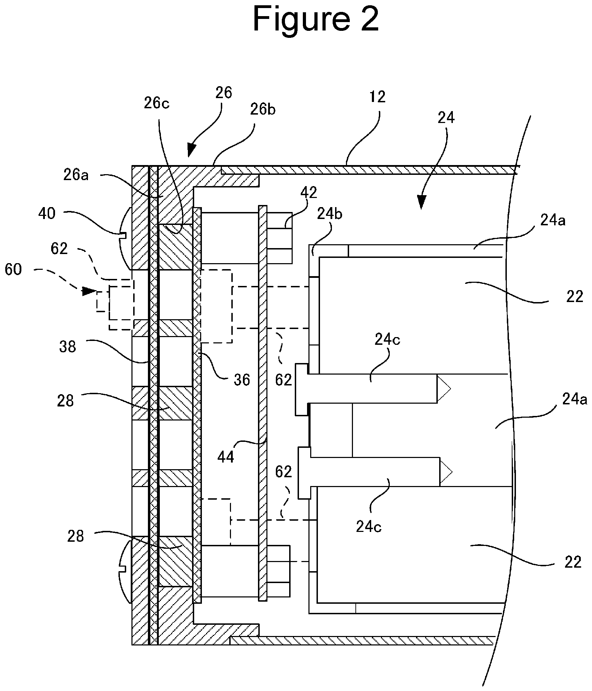

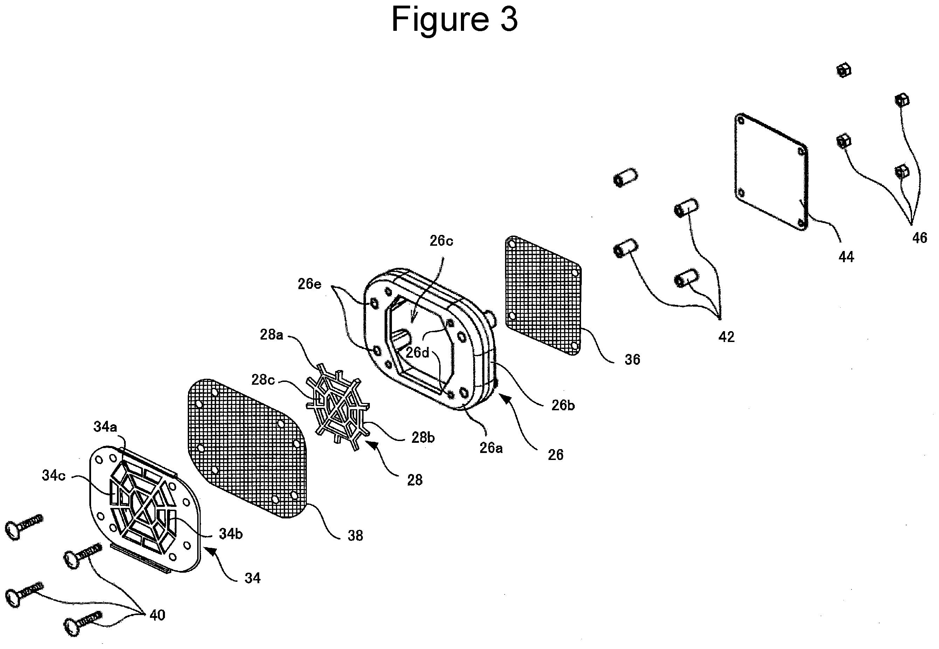

FIG. 2 is a cross sectional view illustrating a configuration of the gas discharge portion 14 provided on one end side of the case 12, and FIG. 3 is an exploded perspective view illustrating a configuration of the gas discharge portion 14.

The case 12 is open at both ends in the longitudinal direction and is provided with the gas discharge portion 14 so as to cover an opening on one end side.

The gas discharge portion 14 has a cap 26 attached to an end of the case 12 in the longitudinal direction. The cap 26 includes a donut-shaped outer edge 26a and a cylindrical portion 26b extending from an outer peripheral end of the outer edge 26a toward a portion of the case 12 containing the battery 30 (referred to as a back side), and a back side end of the cylindrical portion 26b is fitted into a back-side distal end of the case 12 in the axial direction.

An opening 26c is formed in a central portion of the cap 26, and a spacer 28 is fitted into the opening. In addition, the cap 26 has two (eight in total) holes at each of four corners, four holes on the inner side in the width direction are bolt holes 26d for inserting bolts 40 for fixing respective members of the gas discharge portion 14, and four holes on the outer side are shaft holes 26e for inserting fixing shafts 60 for fixing both ends of the case 12.

Here, the opening 26c of the cap 26 has an octagonal shape, and the outer shape of the spacer 28 fitted into the opening is also an octagonal shape. The spacer 28 is formed by combining a beam 28a radially extending from the center and an annular beam 28b having different radii, and an opening 28c is formed between the beam 28a and the beam 28b.

An inner filter 36 is located on the case 12 side (back side) of the spacer 28. The inner filter 36 covers the opening 26c of the cap 26. Also, an outer filter 38 is located on the side (referred to as the front side) of the spacer 28 opposite to the case 12 so as to cover the opening 26c and also cover the outside surface of the cap 26 in the axial direction. The inner filter 36 is larger than the opening 26c. Also, the inner filter 36 is smaller than the cap 26, and has bolt holes at the four corners thereof, but does not have shaft holes. Meanwhile, the outer filter 38 has substantially the same shape as the end surface of the cap 26 in the axial direction and has bolt holes and shaft holes at the four corners. Note that a porous material is adopted for the inner filter 36 and the outer filter, but any material may be used as long as gas can pass therethrough to remove a predetermined solid material.

The inner filter 36 and the outer filter 38 may be, for example, punching metal in which an infinite number of through holes are formed in an aluminum plate. **In** the present embodiment, two filters of the inner filter 36 and the outer filter 38 are provided. The release of a solid material can be suppressed, and a cooling effect by heat transfer can also be expected for the gas passing through these filters.

Furthermore, in order to increase the filtering effect, the filtering effect can be increased by shifting the positions of the openings of the inner filter 36 and the outer filter 38 with respect to the gas flowing direction.

The holding plate 34 is located outside the outer filter 38 in the axial direction. The holding plate 34 includes a peripheral portion corresponding to the end surface of the cap 26 in the axial direction and a central portion corresponding to the spacer 28 inside the peripheral portion. Four bolt holes and four shaft holes are provided at four corners of the peripheral portion.

The central portion of the holding plate 34 has substantially the same shape as the spacer 28. That is, beams 34a and 34b of the holding plate 34 correspond to the beams 28a and 28b of the spacer 28, and an opening 34c of the holding plate 34 corresponds to the opening 28c of the spacer 28. Therefore, the resistance of the spacer 28 and the holding plate 34 to the flow of the gas can be suppressed to be small.

On the back side of the inner filter 36, a protection partition wall 44 is located via four pipe-shaped partition wall spacers 42. The protection partition wall 44 has a shape corresponding to the inner filter 36 and is provided with bolt holes at four corners.

Bolt holes are provided at the four corners of the holding plate 34, the outer filter 38, the cap 26, the inner filter 36, and the protection partition wall 44 at the same position in the longitudinal direction, and the four partition wall spacers 42 are also provided at positions corresponding to the bolt holes. The four bolts 40 are inserted into the bolt holes of the respective members from the front side of the holding plate 34 and pass through the partition wall spacer 42, so that the distal ends thereof protrude to the back side of the protection partition wall 44. Then, by screwing nuts 46 to the distal ends of the four bolts 40, the holding plate 34 and the protection partition wall 44 are tightened toward the internal members, and the respective members are fixed.

### "Configuration of Spacer 28"

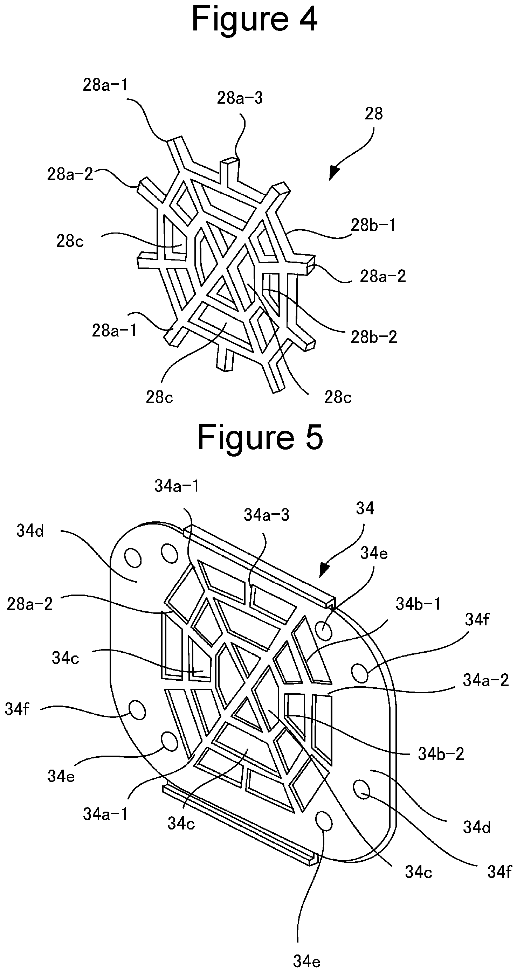

FIG. 4 is an enlarged view of the spacer 28 in FIG. 2. In this manner, the beams 28a in the radial direction and the annular beams 28b are combined. Two beams 28a-1 in the radial direction cross the entire spacer 28 to form an X shape. Meanwhile, two annular beams 28b-1 and 28b-2 having different diameters are concentrically located. Further, two (four in total) radial beams 28a-2 on one side radially extending from the inner annular beam 28b-2 are provided in the width direction, and two radial beams 28a-3 extending upward and downward from the outer annular beam 28b-1 are provided in the longitudinal direction. Each of the beams 28a and 28b has a quadrangular prism shape, four openings 28c are formed inside, eight openings 28c are formed in an intermediate portion, and 10 openings 28c are formed between the beams and the outer cap 26. In addition, the spacer 28 abuts on the inner filter 36 on one surface in the axial direction and abuts on the outer filter 38 on the other surface in the axial direction, thereby promoting heat dissipation from the inner filter 36 to the outer filter 38 via the spacer 28. Therefore, when the spacer 28 has a heat capacity higher than those of the inner filter 36 and the outer filter 38, heat dissipation from the inner filter 36 to the outer filter 38 is further promoted. At this time, all of the spacer 28, the inner filter 36, and the outer filter 38 are preferably made of metal from the viewpoint of thermal conductivity. Also, the spacer 28 may be integrated with at least one of the inner filter 36 and the outer filter 38.

### "Configuration of Holding Plate 34"

FIG. 5 is an enlarged view of the holding plate 34 in FIG. 2. In this manner, the beams 34a in the radial direction and annular beams 34b are combined. That is, the beams 34a-1, 34a-2, and 34a-3 are provided corresponding to the radial beams 28a-1, 28a-2, and 28a-3 of the spacer 28, and the beams 34b-1 and 34b-2 overlapping the annular beams 28b-1 and 28b-2 are provided, thereby forming the openings 34c of the holding plate 34 overlapping the openings 28c of the spacer 28. As described above, since the openings and the beams of the spacer 28 overlap the openings and the beams of the holding plate 34, the gas passing through the spacer 28 and the holding plate 34 easily flows. When the rigidity of the gas discharge portion 14 is increased by the spacer 28 and the holding plate 34 abutting on each other via the outer filter, heat is easily drawn mainly from the spacer 28 to the holding plate 34.

In addition, in the holding plate 34, four bolt holes 34e through which the bolts 40 are inserted and four shaft holes 34f through which the fixing shafts 60 are inserted are provided at four corners of a peripheral portion 34d corresponding to the end surface of the cap 26 in the axial direction.

### "Fixation of Gas Discharge Portion 14"

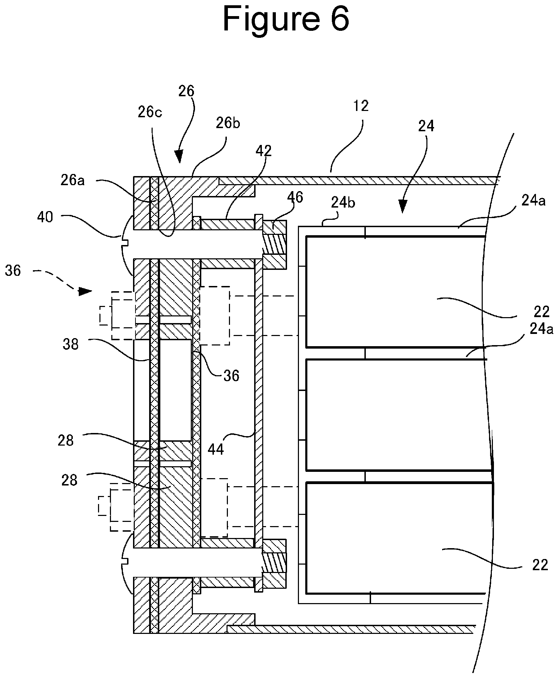

Here, FIG. 6 is a cross-sectional view at a position shifted from the center in the axial direction where the bolt 40 is located. **In** this manner, the bolts 40 are located so as to pass through the holding plate 34, the outer filter 38, the outer edge 26a of the cap 26, the inner filter 36, and the bolts 40 further pass through the partition wall spacer 42 located on the inner side of the inner filter 36 in the axial direction, and the nuts 46 are fixed with the protection partition wall 44 interposed therebetween. That is, by tightening the nuts 46 to the end of the bolt 40, the protection partition wall 44 is pressed against the partition wall spacer 42, and the holding plate 34, the outer filter 38, the outer edge 26a of the cap 26, and the inner filter 36 are tightened by the partition wall spacer 42 and the heads of the bolts 40.

### "Fixation with Fixing Shaft"

As illustrated in FIG. 2, the holding plate 34, the outer filter 38, and the cap 26 are provided with shaft holes at four corners. The fixing shafts 60 indicated by broken lines in FIGS. 3 and 6 pass through these shaft holes and are tightened to the holding plate 34 by the nuts 62. Although not illustrated, shaft holes are also provided to the end surface of the case 12 on the other end side, and the fixing shaft 60 passes through the shaft hole at the other end, and the nuts can be screwed into the distal ends thereof. Accordingly, the nut 62 is fastened to the end of the fixing shaft 60, whereby the cap 26 and the case 12 can be fixed. Note that the fixing shafts 60 may pass through also a holder that contains the battery 30 therein.

As illustrated in FIGS. 3 and 6, the case 12 has a hollow quadrangular cylindrical shape and contains the plurality of batteries 30 therein. In this example, the plurality of batteries 30 are contained in the holder 24, and the holder 24 includes the main body 24a that individually supports the batteries 30 and ends 24b that cover the end of the main body 24a in the axial direction, and both are fastened by bolts 24c. That is, after the batteries 30 are contained in the main body 24a, the ends 24b are fixed to the main body 24a with the bolts 24c.

### "Battery"

The battery 30 which is an example of the power storage device of the present disclosure is, for example, a cylindrical lithium ion secondary battery and has both end electrodes as described above. The battery 30 is not limited to the present embodiment and may be another power storage device such as a nickel-metal hydride battery, a nickel-cadmium battery, or a lithium polymer battery, a capacitor, or the like. The battery 30 is a cylindrical secondary battery, but is not limited to this embodiment, and may be a rectangular secondary battery.

### "Material and the Like of Each Member"

Here, the case 12 is formed of metal such as aluminum, has strength, and is excellent in heat dissipation. **In** addition, grooves or projections may be formed in the case 12 along the longitudinal direction in order to improve strength. Furthermore, in order to insulate the metal case 12, the surface thereof may be covered with a laminate film, vinyl, or the like. The cap 26 may be configured with hard plastic or metal. Also, the inner filter 36 and the outer filter 38 may be, for example, punching metal in which an infinite number of through holes are formed in an aluminum plate. The protection partition wall 44 may be made of a material having a melting point higher than those of the inner filter 36 and the outer filter 38. For example, iron, stainless steel, or ceramics may be used. For the spacer 28 and the holding plate 34, aluminum, iron, stainless steel, ceramics, or the like can be used. The bolt 40 has a screw head at one end and is fastened with the nut 46 at the other end, but these may be hard plastic or metal.

### "Flow of Generated Gas"

With such a configuration, the gas generated from battery 30 is first detoured outward by the protection partition wall 44. As a result, it is possible to suppress the high-temperature gas from being directly blown to the inner filter 36. Then, the gas is filtered by two filters of the inner filter 36 and the outer filter 38 and then discharged to the outside of the case 12. Therefore, the flow rate of the generated gas is weakened, and the gas is discharged with the solid material removed by the filter. In addition, the longer the path to discharge, the lower the temperature. Therefore, it is possible to suppress an adverse effect on peripheral devices due to the discharged gas.

In addition, the spacer 28 is positioned between the inner filter 36 and the outer filter 38 to maintain a gap therebetween. In particular, it is possible to prevent the inner filter 36 from being pushed toward the outer filter 38 by the gas generated in the electric power storage module and the inner filter 36 from swelling. As the inner filter 36 swells and approaches the outer filter 38, it is possible to prevent one filter of the inner filter 36 and the outer filter 38 from blocking the opening of the other filter. This effect is particularly remarkable when the opening of the inner filter 36 and the opening of the outer filter 38 are located to be shifted from each other. Furthermore, deformation of swelling of the outer filter 38 by the holding plate 34 can be suppressed, and deformation of the inner filter 36 can be suppressed via the spacer 28.

### "Structure for Fixing Battery to Holder"

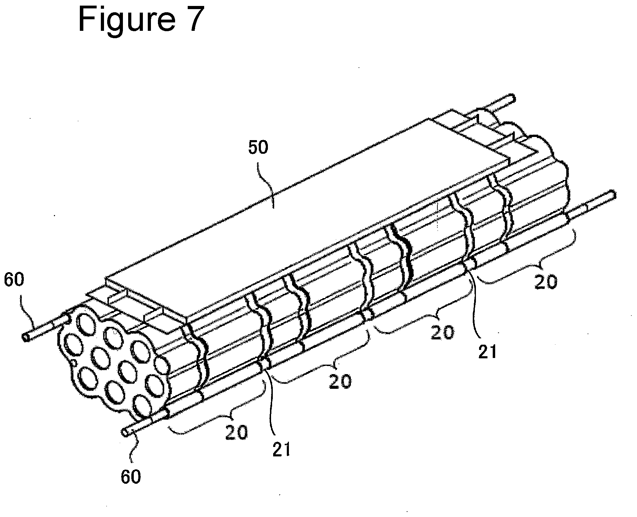

FIGS. 7 to 19 illustrate an example of a structure of a battery and a holder that contains the battery.

### "Electric Power Storage Block"

As illustrated in FIGS. 7 to 8, the electric power storage module 10 includes a plurality of electric power storage blocks 20. The electric power storage module 10 includes the four electric power storage blocks 20 connected in series in the longitudinal direction but is not limited to the present embodiment. An inter-block member 21 is provided between the electric power storage blocks 20. The inter-block member 21 includes a wall surface that separates the electric power storage blocks 20 from each other, a cushioning material, and the like.

The electric power storage block 20 is a unit in which a plurality of batteries 30 are arranged in multiple stages. Also, in the electric power storage block 20, the plurality of batteries 30 are located such that the longitudinal direction (height direction, axial direction) of batteries 30 is parallel to the first direction. Note that in the electric power storage block 20, the plurality of batteries 30 may be provided not in multiple stages but in only one stage. Further, the electric power storage blocks 20 may not be located side by side in the first direction via the inter-block member 21 and may be electric power storage modules in which the plurality of electric power storage blocks 20 are arranged side by side in a direction orthogonal to the first direction. At this time, each electric power storage block 20 may have a wall erected on an edge of an upper surface of a holder 31 and a lid which abuts on the upper end of the wall to form a duct between the lid and the upper surface.

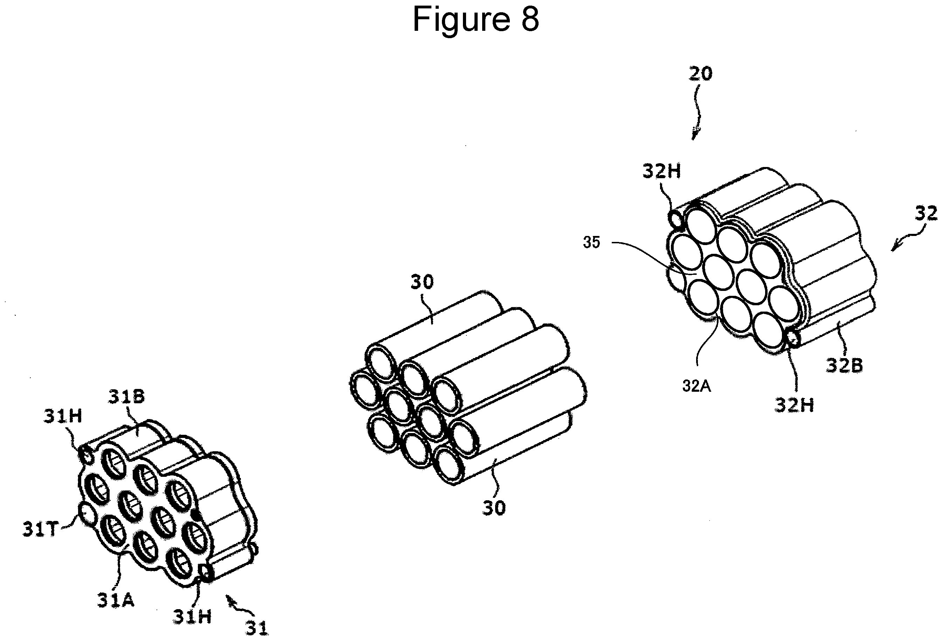

The electric power storage block 20 includes the plurality of batteries 30 and the holders 31 and 32 that hold respective batteries 30. As illustrated in FIG. 8, the holders 31 and 32 have partition walls 35 that form containing recesses for containing the plurality of batteries 30.

In the electric power storage block 20 according to the present embodiment, 10 batteries 30 are arranged in three rows (three parallel units described below) of three, four, and three batteries in a hexagonal lattice pattern shape (or in a stacked shape).

The electric power storage blocks 20 may be configured with a plurality of parallel units each including the plurality of batteries 30. Here, the parallel unit may be configured by connecting electrodes on both end surfaces of the battery 30 in the first direction in parallel by lead plates. In the parallel unit, the batteries 30 may be arranged in a line. Further, the parallel units adjacent to each other may be arranged such that the polarities of the electrodes on the end surfaces of the batteries 30 are in directions opposite to each other. Further, in the electric power storage block 20, the parallel units located adjacently to each other may have a configuration of being connected in series.

The power storage device according to the present disclosure including the battery 30 is, for example, a cylindrical lithium ion secondary battery and has electrodes on both end surfaces in the axial direction as described above. The battery 30 is not limited to the present embodiment and may be another secondary battery such as a nickel-metal hydride battery, a nickel-cadmium battery, or a lithium polymer battery, a capacitor, or the like. The battery 30 is a cylindrical secondary battery, but is not limited to this embodiment, and may be a rectangular secondary battery.

The battery 30 may include an electrode group in which a positive electrode and a negative electrode each having a band shape are wound while facing each other with a separator interposed therebetween, a can (outer casing) that contains the electrode group together with an electrolyte and has a cylindrical portion and a bottom portion that closes one end of the cylindrical portion, and a sealing member that closes an opening at the other end of the can. The sealing member may be electrically connected to one electrode of the positive electrode and the negative electrode via a lead or the like. The can may be electrically connected to the other electrode of the positive electrode and the negative electrode via a lead or the like. When the sealing member and the can have different polarities, an insulating member such as a gasket may be interposed between the sealing member and the opening of the can. On the outer peripheral surface of the can, a groove 30A may be formed in a region between an electrode assembly and the sealing member. Furthermore, on the inner peripheral surface of the can, a portion where the groove 30A is formed may protrude toward the inside of the can. Note that the groove 30Ais referred to as a recess. Inside the can, a sealing member may be located on the projection by the groove, and an end at the opening of the can may be bent inward of the can in the radial direction. The sealing member can be fixed in the first direction (axial direction, height direction of battery) by the end and the projection. When a through hole is provided in the sealing member, and a terminal connected to one electrode of the electrode assembly passes through the through hole, the outer peripheral edge of the sealing member and the opening of the can may be welded and sealed. **In** this case, a recess for engaging with a rib 70 may be formed on the outer surface of the can. The outer casing including the can may be configured with a conductive agent such as metal when electrically connected to the electrode assembly and may be configured with an insulating material such as a resin when not electrically connected to the electrode assembly. The battery 30 may have an exhaust portion at least at one end in the first direction. With this configuration, gas accumulated in the battery 30 can be discharged to the outside of the battery 30 and the outside of the electric power storage block 20 via the exhaust portion. The exhaust portion may be an irreversible valve that opens by breaking the imprint, or may be a reversible valve that further compresses the compressed elastic body with gas pressure to form an exhaust path. Exhaust portions may be formed at both ends of the battery 30 in the first direction.

As illustrated in FIG. 8, the holders 31 and 32 are divided into two parts in a substantially central portion of the battery 30 in a longitudinal direction (first direction, axial direction, height direction). The holder 31 holds one sides of the plurality of batteries 30 arranged in a hexagonal lattice pattern. The holder 31 includes a holding portion 31A integrally formed with cylindrical housing parts into which one ends of the plurality of arranged batteries 30 in the longitudinal direction are respectively fitted, and a side wall 31B formed along the outer periphery of the plurality of arranged batteries 30. A plurality of openings penetrating in the first direction (the longitudinal direction of the battery) are formed in each of the holding portion 31A of the holder 31 and the holding portion 32A of the holder 32. Through this opening, current collection and exhaust of the battery are performed. Note that, without using the holder 32, the holder 31 may cover both ends of the outer peripheral surface of the battery 30 in the axial direction to cover the insertion port of the housing part of the holder 31 with a plate material such as a lid. At this time, the plate material may be fastened to the corner of the holder 31 with a screw or the like.

A hole 32H penetrating in the longitudinal direction is provided in the side wall 31B of the holder 31. The fixing shaft 60 is inserted into the hole 32H and is fitted to the inter-block member 21. The holes 32H are provided at two locations, but are not limited to the present embodiment, and may be provided according to the number of the fixing shafts 60. Note that the holder 31 may have an electrolyte injection hole 31T into which a potting material is poured after the battery 30 is contained and assembled in the holders 31 and 32.

Since the holder 32 has the same configuration as the holder 31, the description thereof is omitted. An engagement portion that is formed at the other end of the side wall 31B of the holder 31 in the longitudinal direction is engaged with an engagement portion formed at one end of a side wall 32B of the holder 32 in the longitudinal direction, whereby the holder 31 and the holder 32 are connected.

The partition walls 35 are formed so as to fill the gaps between the batteries 30 arranged in the hexagonal lattice pattern as described above. The partition wall 35 is formed of a material having some elasticity such as hard plastic or a potting material but is not limited to the present embodiment. The partition wall 35 may include a heat absorbing material such as aluminum hydroxide. In the present embodiment, the partition wall 35 is integrated with the holder 31 but may be separated. As described below, the rib 70 may be formed on the partition wall 35, and the rib 70 needs to have relatively large elasticity. Therefore, the partition wall 35 may be formed of a plastic material having relatively large elasticity. Examples of the upper plastic material include polycarbonate (PC).

### "Configuration of Rib 70"

Although not illustrated in FIGS. 7 to 8, in either or both of the holders 31 and 32, the rib 70 is provided on the inner surface of the housing part of battery 30. Although an example in which the rib 70 is provided in the holder 31 is described below, the rib 70 may be provided on the inner wall surface of the holder 32, or the ribs 70 may be provided on both of the holders 31 and 32.

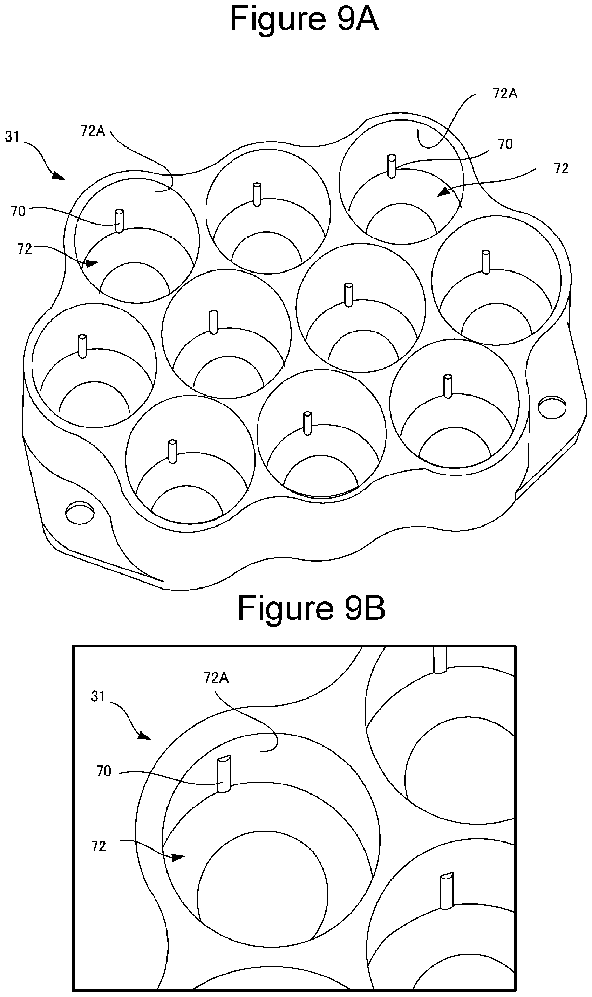

FIGS. 9A and 9B are diagrams illustrating a configuration of the rib 70 in the holder 31, FIG. 9A is a perspective view, and FIG. 9B is an enlarged view of main parts. The holder 31 is integrally formed including the partition wall 35, and the holder 31 has a housing part 72 that is a cylindrical hole containing one end of battery 30 in the first direction. The rib 70 is formed on an inner wall 72A of the housing part 72. The rib 70 is a ridge projection extending in the axial direction of the housing part 72 and extends partway in the axial direction (toward the center in the axial direction of the battery 30) from the bottom portion of the housing part 72.

In this example, only one rib 70 is provided so that the battery is pressed against the opposite side of partition wall 35, but the plurality of ribs 70 may be provided so that the battery 30 is held in the housing part 72 with the plurality of ribs 70. In particular, by providing greater than or equal to three ribs 70 on the outer periphery of the battery 30, the battery 30 can be more stably held.

### "Holding of Battery 30"

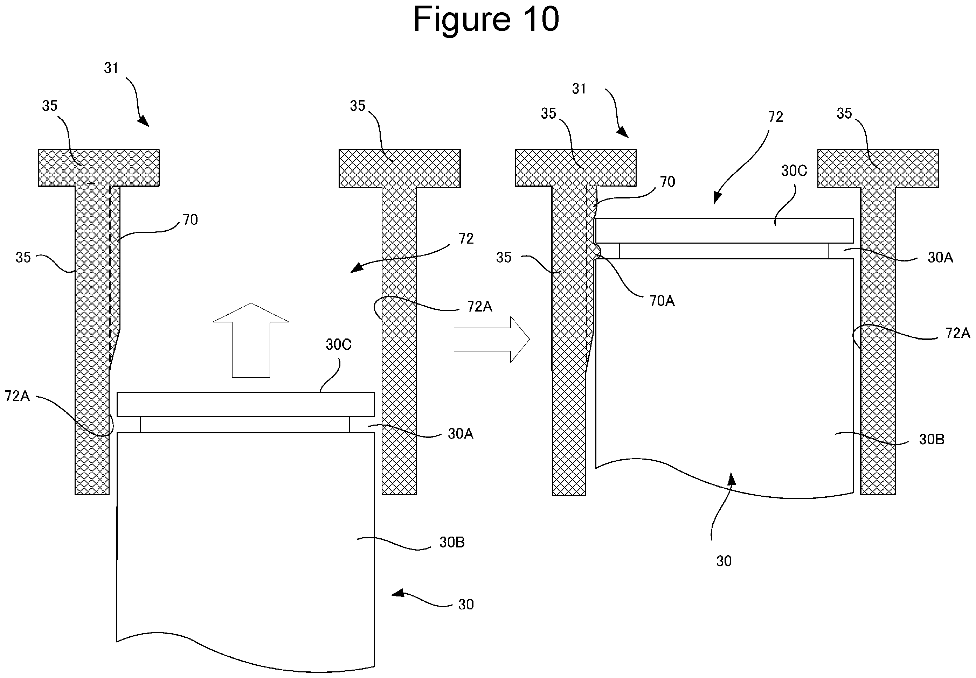

FIG. 10 is a diagram for describing holding of the battery 30 in the holder 31 using the rib 70, where the left diagram illustrates a status before insertion of the battery 30, and the right diagram illustrates a status after insertion of the battery 30. Note that the rib 70 is a ridge projection illustrated in FIG. 5, and one rib is provided on the inner wall 72A of the housing part 72.

Here, as illustrated in FIG. 6, the battery 30 has the annular groove 30A near one end. That is, the groove 30A extending in the circumferential direction on the side surface of the battery 30 is formed between a body part 30B serving as the main body of the battery 30 and a head part 30C in which the electrode and the like are formed. The groove 30A is formed in the battery 30 by, for example, using an outer cylinder (case) of the battery 30 as a cylindrical container having one end opening, containing an electrode assembly and an electrolyte solution therein, and then caulking an open end of a cylindrical portion to fix a sealing member onto the groove 30A. Also, a diameter based on an inner side end of the rib 70 of the housing part 72 is smaller than diameters of the body part 30B and the head part 30C of the battery 30. The difference in diameter is within an elastically deformable range of the rib 70 (including a deformation range of the inner wall 72A), and the battery 30 can be inserted into the housing part 72 by displacement of the rib 70.

By pressing the battery 30 in the axial direction, the rib 70 is pressed against the head part 30C and the body part 30B to be elastically recessed, and the head part 30C and the body part 30B are inserted (or press-fitted) into the housing part 72. When the battery 30 is inserted into the housing part 72 to a predetermined value, a portion of the rib 70 facing the groove 30A swells toward the inside of the groove 30A. That is, the rib 70 is pressed outward in the portion facing the head part 30C and the body part 30B of the rib 70, but there is no reaction force from the battery 30 side in the portion facing the groove 30A. Therefore, in the rib 70, a swelling part 70A that swells toward the original position is formed. Note that, at the end of the head part 30C and the body part 30B on the groove 30A side, the rib 70 slightly moves to the groove 30A side, and thus the swelling part 70A may become larger accordingly.

As described above, in the present embodiment, the rib 70 that is a ridge projection is formed on the inner wall 72A of the housing part 72 of the holder 31 containing the battery 30. Then, the battery 30 is inserted while deforming the rib 70. Therefore, no special work is required when the battery 30 is inserted. When the insertion is completed, the rib 70 swells toward the groove 30A, and the swelling part 70A is formed. Therefore, the movement of the battery 30 in the axial direction can be reliably prevented. Since the rib 70 is integrally formed with the holder 31, attachment work is not required in the formation, and the rib can be formed by a normal molding process. Therefore, an adhesive is unnecessary, the number of parts is small, and workability at the time of assembling the electric power storage module is improved. In particular, since the shape of the swelling part 70A is used, a reaction force using the shape can be generated against an impact, and the battery 30 can be reliably held. In addition, when the dimension of the rib 70 in the first direction is larger than the maximum dimension of the groove 30A in the first direction, a portion other than the groove 30A can be held, so the battery 30 can be more firmly held by the rib 70.

Note that the example of FIG. 10 is a case where the three ribs 70 are provided, and thus the rib 70 is shown on only one of the two illustrated inner walls 72A of the housing part 72.

### "Number of Ribs"

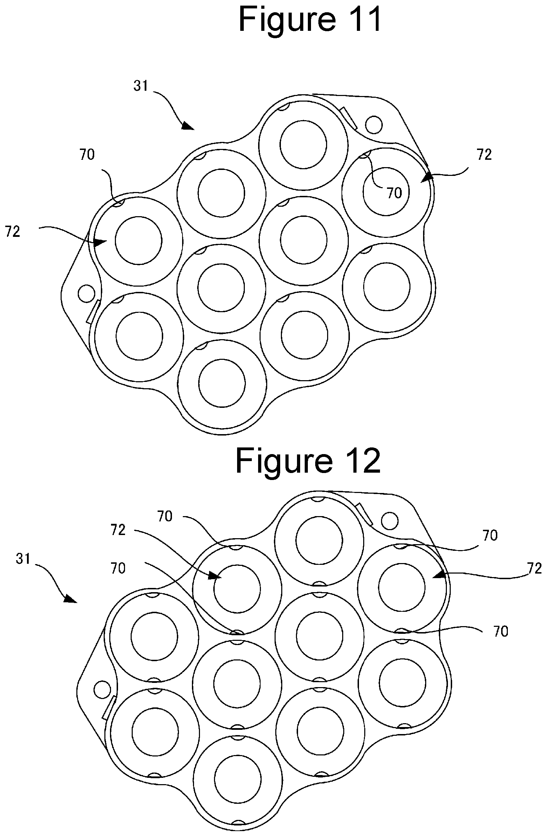

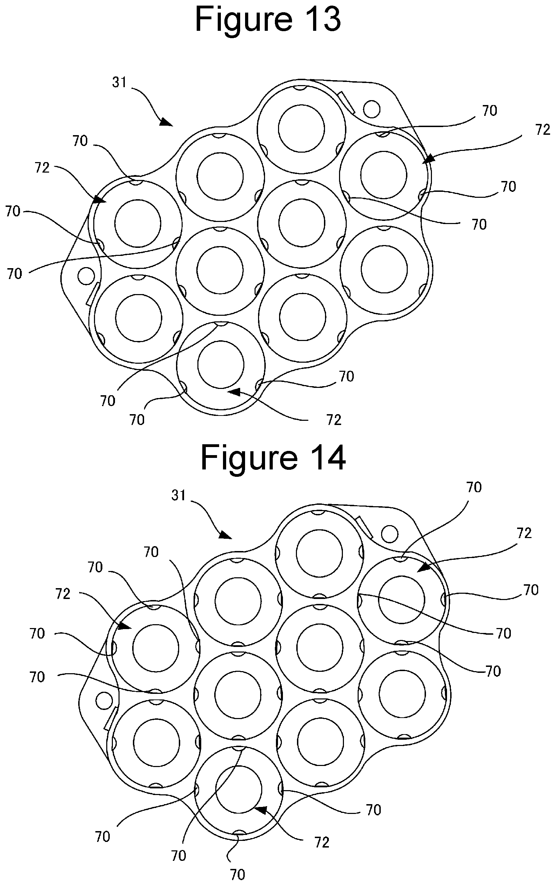

FIGS. 11 to 14 are plan views of the holder 31 as viewed from the axial direction, FIG. 11 illustrates an example in which the one rib 70 is provided, FIG. 12 illustrates an example in which the two ribs 70 are provided, FIG. 13 illustrates an example in which three ribs 70 are provided, and FIG. 14 illustrates an example in which four ribs 70 are provided. In the case where one rib is provided, the rib may be provided at any position in the circumferential direction of the housing part 72. However, from the viewpoint of manufacturing, the ribs 70 having the same shape may be provided at the same position in all the housing part 72. In the case of FIGS. 12 to 14, the plurality of ribs 70 provided in one housing part 72 may be arranged at equal intervals in the circumferential direction.

### "Shape of Rib"

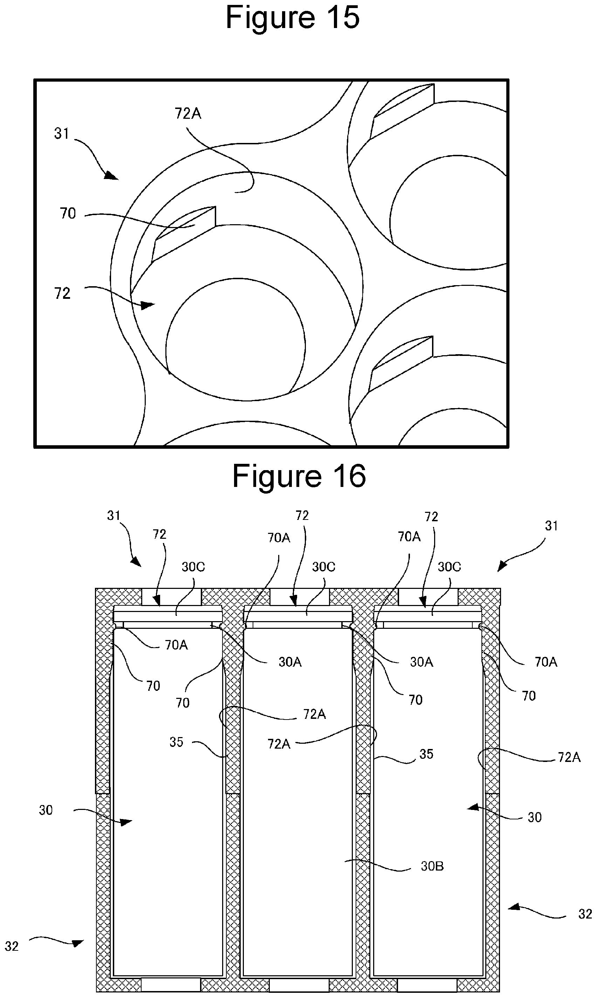

FIG. 15 is a diagram illustrating an example in which the shape of the rib 70 is changed. In this example, the rib 70 is enlarged in the circumferential direction. In particular, when viewed from the radial direction of the housing part 72, the dimension of the rib 70 in the circumferential direction is longer than that in the first direction. With such a configuration, it is possible to suppress inclination of the battery 30 about the radial direction in the housing part 72.

### "Holding Configuration"

FIG. 16 is a diagram illustrating a state in which battery 30 is held by the holders 31 and 32. In this example, since the groove 30A is provided on the holder 31 side of the battery 30, the rib 70 is provided on the inner wall 72A of the housing part 72 of the holder 31. Also, in this example, the ribs 70 are provided on the inner walls 72A on both sides of the housing part 72.

### "Description of Modification"

### <Example in Which Notch is Provided>

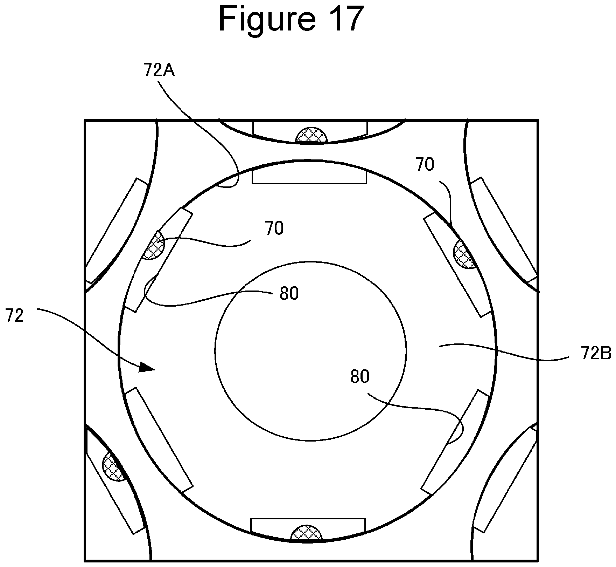

FIG. 17 is a plan view of an example in which a notch is formed in the bottom surface of the holder 31. In this example, six notches 80 are provided in the periphery of a bottom portion 72B of the one housing part 72 that is in contact with the inner wall 72A. The notches 80 are larger than the ribs 70 and are positioned at equal intervals in the circumferential direction. The ribs 70 are provided at positions corresponding to every other three of the six notches 80. Therefore, the end of the rib 70 on the bottom surface side is positioned in the notch 80.

When such a notch 80 is provided, the inner wall 72A of the housing part 72 on which the rib 70 is provided is elastically deformed easily, the battery 30 is easily inserted, and the rib 70 can be more reliably pressed against the outer peripheral surface of the battery 30. Note that the notch 80 may be an opening penetrating in the first direction or a thinner portion than the other portion in the bottom portion of the housing part 72.

### <Example in Which Support Column is Provided>

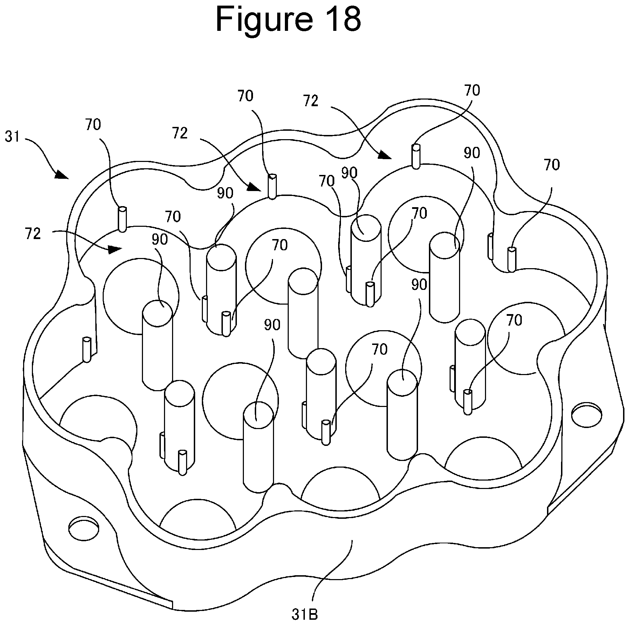

FIG. 18 is a diagram illustrating an example in which a support column 90 is provided instead of the partition wall 35. That is, the holder 31 has the 10 housing parts 72 for containing the batteries 30. Among the 10 housing parts 72, the two inner housing parts 72 are each partitioned by the six support columns 90 and the upper surface of the holder 31. Each of the eight housing parts 72 positioned around the two housing parts 72 is partitioned by the side wall 31B of the holder 31, the upper surface of the holder 31, and the two support columns 90. Also, the three ribs 70 are positioned around one housing part 72. Therefore, some of the ribs 70 are provided on the inner side surface of the side wall 31B, and the remaining ribs 70 are provided on the side surface of the support column 90.

Even with such a configuration, as in the above-described embodiment, the battery 30 can be reliably held by the swelling part 70A of the rib 70. Since the use of the partition wall 35 can be suppressed by using the support column 90, the distance between the pair of batteries 30 adjacent to each other can be easily narrowed.

### "Example in Which Hole is Provided in Sleeve of Battery 30"

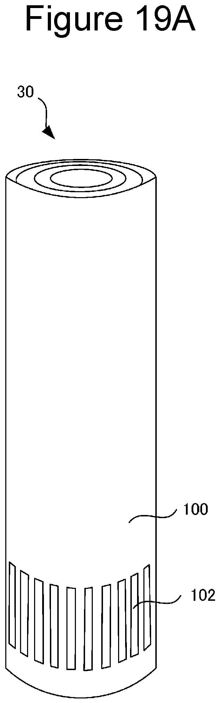

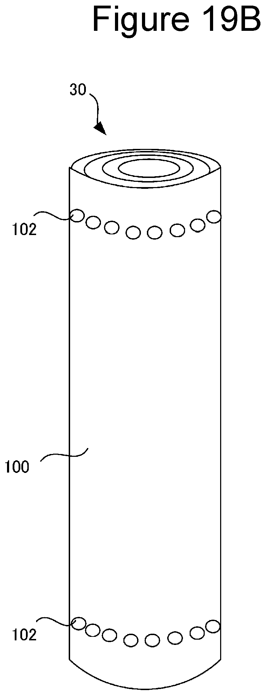

FIGS. 19A and 19B are diagrams illustrating an example in which a side surface of the battery 30 is covered with a sleeve 100, and a hole is formed in the sleeve 100, (A) illustrates an example in which a slit 102 is formed as a recess, and (B) illustrates an example in which a round hole 104 is formed as a recess.

As described above, in this example, the sleeve 100 that covers the outer peripheral surface of the battery 30 (particularly, the can) is provided. The sleeve 100 is formed of metal such as plastic or aluminum and can protect the battery 30. Normally, a plastic or aluminum thin plate having a size corresponding to the size of the battery 30 is wound around and bonded to the side surface of the battery 30.

In the example of FIG. 19A, the plurality of slits 102 extending in the axial direction are formed side by side in the circumferential direction at positions corresponding to the ribs 70 of the housing part 72 of the sleeve 100. Note that the width of the slit 102 can be set smaller than that of the rib 70. Accordingly, in the rib 70, a part thereof swells toward the inside of the slit 102. Also, the width of the slit 102 may be larger than the width of the rib 70. Accordingly, a part of the rib 70 swells toward the inside of the slit 102.

That is, the portion of the rib 70 facing the slit 102 swells toward the outer peripheral surface of the battery 30 by the thickness of the sleeve 100, and the swelling part 70A is formed therein to be engaged (or fitted) with the end of the slit 102. Accordingly, the battery 30 can be held in the holder 31 by engagement (or fitting) between the swelling part 70A and the slit 102.

In addition, the beam between the slits 102 can move by setting the battery 30 in the portion where the slit 102 is formed to be a recessed part. For example, the beam can be provided at a position corresponding to the groove 30A of the battery 30. In this case, the length of the slit 102 in the axial direction may be larger or smaller than the width of the groove 30A in the axial direction. When the length is larger, the rib 70 is restricted in the axial direction of the swelling part 70A by both ends of the groove 30A. When the length is smaller, the axial direction of the swelling part 70A is restricted by both ends of the slit 102 in the axial direction.

Further, the groove 30A may not be present at the position of the battery 30 corresponding to the slit 102, and the diameter of the battery 30 at the end may be small. Also with this configuration, the swelling part 70A can be regulated by the slit 102, and thus the vertical movement of the battery 30 can be regulated by the rib 70.

**In** FIG. 19B, the round hole 104 is provided instead of the slit 102. Also with this configuration, a part of the rib 70 swells toward the round hole 104, the swelling part 70A is formed therein, and the same function and effect as the slit 102 can be obtained.

Here, the hole provided in the sleeve 100 is not limited to the slit 102 or the round hole 104 and may have any shape as long as the swelling part 70A can be received. In addition, in the sleeve, a hollow may be formed instead of a penetrating hole as a recess.

With such a configuration, when the battery 30 with the sleeve 100 is inserted into the housing part 72, not only the rib 70 is deformed, but also the portion provided with the slit 102 and the round hole 104 is deformed. As a result, the force for holding the rib 70 can be increased, and the reaction force against the impact increases.

### "Characteristics of Battery Module"

The features of the battery module illustrated in FIGS. 7 to 19B are illustrated below.

An electric power storage module according to the present disclosure includes:
a plurality of power storage devices each of which has a cylindrical shape and has a recess on a side surface; and
a holder having a housing part in which at least one hole for containing one end of the plurality of power storage devices in an axial direction is formed,
in which a rib protruding toward the recess is formed inside the housing part, and
the rib is elastically deformable, enters the recess, and engages with the recess.

### INDUSTRIAL APPLICABILITY

The electric power storage module according to the present disclosure can be used as a power source of an electric vehicle or the like.

### REFERENCE SIGNS LIST

- 10: ELECTRIC POWER STORAGE MODULE
- 12: CASE
- 14: GAS DISCHARGE PORTION
- 20: ELECTRIC POWER STORAGE BLOCK
- 21: INTER-BLOCK MEMBER
- 24: HOLDER
- 26: CAP
- 28: SPACER
- 30: BATTERY (POWER STORAGE DEVICE)
- 31, 32: HOLDER
- 35: PARTITION WALL
- 36: INNER FILTER
- 38: OUTER FILTER
- 34: HOLDING PLATE
- 40: BOLT
- 42: PARTITION WALL SPACER
- 44: PROTECTION PARTITION WALL
- 50: CIRCUIT BOARD
- 60: FIXING SHAFT
- 70: RIB
- 70A: SWELLING PART
- 72: HOUSING PART
- 80: NOTCH
- 90: SUPPORT COLUMN
- 100: SLEEVE
- 102: SLIT
- 104: ROUND HOLE

## Claims

1. The electric power storage module comprising:
a plurality of power storage devices;
a case that contains the plurality of power storage devices;
an opening that is provided to a portion of the case for discharging gas in the case;
a porous inner filter that is located in the opening;
a porous outer filter that is located outside the inner filter with a gap therebetween; and
a spacer that is provided between the inner filter and the outer filter, holds the gap therebetween, and in which an opening through which the gas passes is formed.

2. The electric power storage module according to claim 1,
wherein an opening of the spacer is larger than openings of the inner filter and the outer filter.

3. The electric power storage module according to claim 1,
wherein the inner filter, the outer filter, and the spacer are configured with metal,
one surface of the spacer abuts on the inner filter, and
the other surface on an opposite side to the one surface of the spacer abuts on the outer filter.

4. The electric power storage module according to any one of claims 1 to 3, further comprising:
a holding plate that is provided further outside the outer filter and covers the outer filter.

5. The electric power storage module according to claim 4,
wherein the holding plate includes an opening overlapping with the opening of the spacer.

6. The electric power storage module according to claim 4,
wherein the spacer includes a beam that partitions the opening, and
the holding plate includes a beam that partitions the opening, and
the beam of the spacer overlaps the beam of the holding plate.

7. The electric power storage module according to claim 4,
wherein the inner filter, the spacer, the outer filter, and the holding plate are fixed to the case by bolts.

8. The electric power storage module according to claim 1,
wherein each of the plurality of power storage devices has a cylindrical shape and has a recess on a side surface, and
is contained in a holder that has a housing part in which at least one hole containing one end of the plurality of power storage devices in an axial direction is formed in the case,
a rib that protrudes toward the recess is formed in the housing part, and
the rib is elastically deformable, enters the recess, and engages with the recess.

9. The electric power storage module according to claim 8,
wherein the rib has a ridge shape extending in an axial direction of the power storage device, longitudinally cuts the recess in the axial direction, and a portion that faces the recess swells toward the recess.

10. The electric power storage module according to claim 8,
wherein the housing part of the holder is configured with a plurality of holes,
the rib is formed on an inner surface of each of the plurality of holes, and
the plurality of power storage devices are contained in the plurality of holes, respectively.

11. The electric power storage module according to claim 8,
wherein the housing part of the holder includes at least one support column extending in the axial direction, and
each of the plurality of power storage devices abuts on an inner surface of the hole and a side surface of the at least one support column.

12. The electric power storage module according to claim 11,
wherein the rib is formed on a side surface of the at least one support column.

13. The electric power storage module according to claim 8,
wherein an opening, a notch, or a thin portion that overlaps the rib in the axial direction is formed on a bottom surface of the housing part.

14. The electric power storage module according to claim 8, further comprising:
a holder that includes a housing part containing the other ends of the plurality of power storage devices in the axial direction.

15. The electric power storage module according to claim 8,
wherein the recess is a groove that extends in a circumferential direction on a side surface of the power storage device.

16. The electric power storage module according to claim 8,
wherein the recess is a plurality of holes that are discretely provided in a circumferential direction on a side surface of the power storage device.

17. The electric power storage module according to claim 8,
wherein the power storage device includes:
an electrode assembly including a positive electrode and a negative electrode;
an outer casing that contains the electrode assembly and includes a cylindrical portion, a bottom portion closing one end of the cylindrical portion, and an opening formed at the other end of the cylindrical portion; and
a sealing member that closes the opening.

18. The electric power storage module according to claim 17,
wherein the power storage device further includes:
a cylindrical sleeve that covers an outer peripheral surface of the outer casing, and
a through hole or a hollow that configures the recess is formed on an outer peripheral surface of the sleeve.

19. The electric power storage module according to claim 17,
wherein a groove that is located between the sealing member and the electrode assembly and extends in a circumferential direction is formed on an outer peripheral surface of the outer casing, and
the groove is the recess.
